# EUROPEAN PATENT APPLICATION

(11) **EP 4 477 527 A1**
(43) Date of publication of application: **18.12.2024**
(21) Application number: 22926196.1
(22) Date of filing: 25.11.2022
(51) Int. Cl.: B63B 59/10, B25J 11/00, B25J 9/16, B25J 19/02, B01D 35/02, C02F 103/08

(54) **HULL CLEANING SYSTEM**

(30) Priority: 08.02.2022 KR 20220016345
(71) Applicant: Slm Global Co., Ltd., Daejeon 34037 (KR)
(72) Inventor: PARK, Young Jun, Daejeon 34049 (KR); HAN, Sung Ho, Daejeon 34037 (KR); PARK, Sang Hyuk, Busan 46743 (KR); KIM, Joo Yong, Busan 46525 (KR)
(74) Representative: Schmitt-Nilson Schraud Waibel Wohlfrom Patentanwälte Partnerschaft mbB
(86) International application number: PCT/KR2022/018806
(87) International publication number: WO 2023/153598

(57) **Abstract**

The present invention provides a system for cleaning a hull of a ship, comprising: a cleaning robot for cleaning outer surface of a hull of a ship and introduce seawater including contaminants removed from the outer surface of the hull during cleaning process to the inside of the cleaning robot; and a purifying device connected to the cleaning robot via a hose member, for filtering and purifying the seawater introduced together with the contaminants from the cleaning robot via the hose member.

## Description

### Technical field

The present invention relates to a system for cleaning the hull of a ship. More specifically, the present invention relates to a system for cleaning the hull of a ship which cleans the outer surface of the hull of a ship with a cleaning robot, and collects and purifies contaminants generated during the cleaning process.

### Background art

In general, since ships are operated in a state having a lower part of the hull submerged in seawater, foreign substances such as various contaminants or various aquatic organisms such as water moss and barnacles may be attached to the bottom or side surface located in the water.

The various foreign substances and aquatic organisms attached to the hull not only damage the appearance of the ship, but also act as resistance when the ship is operating and become a factor lowering the speed of the ship, thus greatly increasing fuel consumption of the ship. Accordingly, it is very important to clean the various foreign substances and aquatic organisms attached to the surface periodically.

In the prior art, the cleaning of the outer surface of the hull was generally carried out by having a diver directly enter the water and clean the foreign substances and aquatic organisms attached to the outer surface of the hull. However, there were problems such that it was difficult to clean up the outer surface of the hull due to the poor working environment and high output of physical energy of the diver, it took a lot of time, and it was impossible to perform the cleaning at places with severe currents.

In particular, in the case of large ships, as the amount of cleaning work increases, the diver has to spend more time in the water, posing a lot of risk to the diver, and the cleaning quality of the deep bottom surface of the ship is remarkably poor because the cleaning work is carried out depending on the diver's view.

Accordingly, in recent years, a hull bottom cleaning robot travelling while being attached to the outer surface of the hull to perform the cleaning work with a brush has been widely used.

However, when using the conventional hull bottom cleaning robot, various foreign substances and aquatic organisms which come off the outer surface of the hull while cleaning the outer surface of the hull are intactly introduced into the water, causing marine pollution. In particular, as for ships leaving to or entering from foreign countries, foreign aquatic organisms are introduced being attached to the outer surface of the hull, thereby disturbing the surrounding marine ecosystem due to the foreign aquatic organisms introduced to the water during the cleaning process.

### Summary of invention

### Technical task

The present invention is to provide a system for cleaning the hull of a ship, and more specifically, the present invention is to provide a system for cleaning the hull of a ship, capable of easily cleaning the outer surface of the hull by a cleaning robot, collecting foreign substances and aquatic organisms which come off the outer surface of the hull during the cleaning process, and going through a filtering process and a purifying process to discharge purified seawater, to effectively prevent marine environmental pollution.

The technical tasks to be achieved in the present invention are not limited to the technical tasks mentioned above, and other technical tasks not mentioned will be clearly understood by those of ordinary skill in the art to which the present invention belongs from the description below.

### Means for solving technical task

In order to solve the above problems, the present invention provides a system for cleaning the hull of a ship, comprising: a cleaning robot for cleaning the outer surface of the hull of a ship and introducing contaminants removed from the outer surface of the hull during the cleaning process to the inside; and a purifying device connected to the cleaning robot via a hose member for filtering and purifying seawater introduced together with the contaminants from the cleaning robot via the hose member.

Also, the present invention provides a system for cleaning the hull of a ship, wherein the cleaning robot comprises: a robot body; a travelling member provided in a lower part of the robot body for travelling in a state attached to the outer surface of the hull through a magnetic force; a cleaning member for cleaning the outer surface of the hull and introducing contaminants removed from the outer surface of the hull into the robot body; and an internal filter unit detachably provided in the robot body for filtering and collecting contaminants in seawater sucked into the robot body.

Also, the present invention provides a system for cleaning the hull of a ship, wherein the purifying device comprises: a seawater suction pump for sucking in seawater introduced from the cleaning robot via the hose member; a primary filter unit for filtering, collecting and discharging contaminants included in the seawater introduced; and a secondary filter unit for secondary-filtering and purifying the seawater filtered by the primary filter unit.

Also, the present invention provides a system for cleaning the hull of a ship, further comprising: a seawater supply tank for temporarily storing seawater filtered by the primary filter unit and supplying the filtered seawater to the secondary filter unit; a filter medium supply tank for selectively supplying a filter medium to the secondary filter unit; a contaminated water storage tank for collecting and storing contaminated water generated during the seawater filtering and purifying process by the secondary filter unit; and a purified water storage tank for storing purified water purified by the secondary filter unit and selectively discharging the purified water to the sea.

Also, the present invention provides a system for cleaning the hull of a ship, further comprising: a pump member detachably provided on the hose member for sucking in the seawater introduced from the cleaning robot to the hose member and transporting the same to the purifying device.

Also, the present invention provides a system for cleaning the hull of a ship, further comprising: an external filter unit detachably provided on the hose member for filtering and collecting contaminants in seawater introduced from the cleaning robot to the hose member.

Also, the present invention provides a system for cleaning the hull of a ship, further comprising a management server for controlling the operation of the cleaning robot and the purifying device in communication with the cleaning robot and the purifying device, wherein the cleaning robot comprises a camera unit for taking images of the state of the outer surface of the hull and transmitting the images taken by the camera unit to the management server, and the management server analyzes the images of the state of the outer surface of the hull transmitted from the cleaning robot and selectively operates the internal filter unit of the cleaning robot and the purifying device according to the degree of contamination of the outer surface of the hull.

Also, the present invention provides a system for cleaning the hull of a ship, wherein the cleaning robot comprises a bypass line for introducing, into the hose member, the seawater sucked into the cleaning body by bypassing the internal filter unit, and the management server analyzes the images of the state of the outer surface of the hull, operates the internal filter unit of the cleaning robot to filter the seawater sucked in when the degree of contamination of the outer surface of the hull is less than or equal to a predetermined reference value, and introduces the seawater sucked in to the purifying device via the bypass line and the hose member and operates the purifying device to perform filtration and purification when the degree of contamination of the outer surface of the hull is greater than or equal to a predetermined reference value.

### Effect of invention

The system for cleaning the hull of a ship according to an embodiment of the present invention is capable of effectively preventing marine environmental pollution by sucking in contaminants such as foreign substances and aquatic organisms which come off the outer surface of the hull during the process of cleaning the outer surface of the hull using a cleaning robot, and quickly going through a filtering process and a purifying process using a purifying device while discharging the purified seawater to the outside.

Also, work efficiency of hull cleaning may be improved by analyzing the image of the state of the outer surface of the hull taken by the cleaning robot, and selectively using only the internal filter unit of the cleaning robot or the external purifying device according to the degree of contamination of the outer surface of the hull to purify seawater by filtering the contaminants sucked in together with the seawater by the cleaning robot.

The effects obtainable in the present invention are not limited to the above-mentioned effects, and other effects not mentioned may be clearly understood by those of ordinary skill in the art to which the present invention pertains from the following description.

### Brief description of drawings

Fig. 1 illustrates the configuration of a system for cleaning the hull of a ship according to a first embodiment of the present invention;
Fig. 2 illustrates the configuration of a cleaning robot according to a first embodiment of the present invention;
Fig. 3 illustrates the configuration of a purifying device according to a first embodiment of the present invention;
Fig. 4 illustrates the configuration of a system for cleaning the hull of a ship according to a second embodiment of the present invention; and
Fig. 5 illustrates the configuration of a system for cleaning the hull of a ship according to a third embodiment of the present invention.

### Best mode for carrying out the invention

Hereinafter, preferred embodiments according to the present invention will be described in detail with reference to the accompanying drawings.

The detailed description set forth below in conjunction with the accompanying drawings is intended to describe exemplary embodiments of the present invention and is not intended to represent the only embodiments in which the present invention may be carried out.

In order to clearly explain the present invention in the drawings, portions that are not related to the present invention are omitted, and like reference numerals are used to refer to like elements throughout the specification.

In an embodiment of the present invention, expressions such as "or" and "at least one" may indicate one of the words listed together, or a combination of two or more.

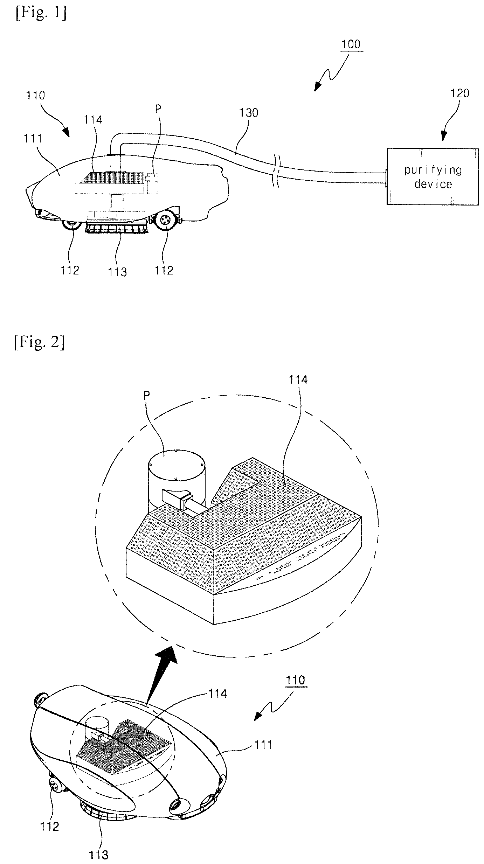

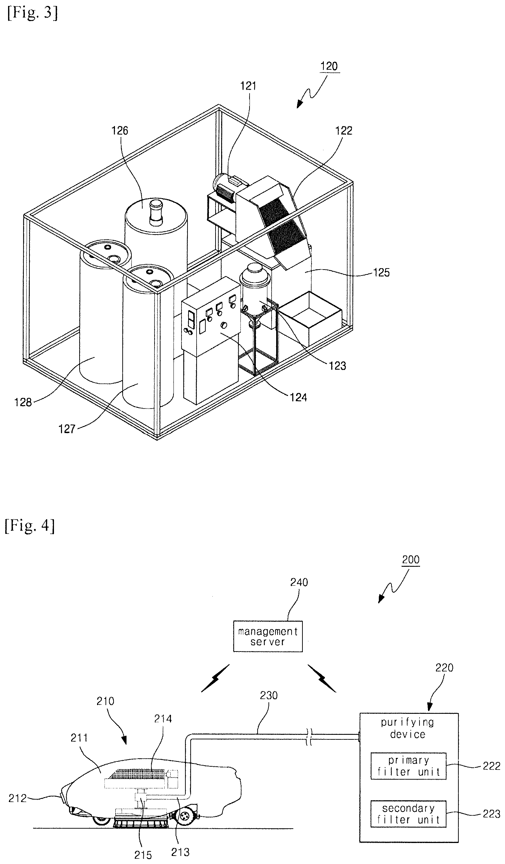

Fig. 1 illustrates the configuration of a system 100 for cleaning the hull of a ship according to a first embodiment of the present invention. Fig. 2 illustrates the configuration of a cleaning robot 110 according to a first embodiment of the present invention. Fig. 3 illustrates the configuration of a purifying device 120 according to a first embodiment of the present invention.

Referring to Figs. 1 to 3, the system 100 for cleaning the hull of a ship according to an embodiment of the present invention may comprise a cleaning robot 110 and a purifying device 120.

The cleaning robot 110 may travel in a state attached to the outer surface of the hull of the ship and clean contaminants such as foreign substances and aquatic organisms attached to the outer surface of the hull.

Such a cleaning robot 110 may move to the outer surface of the hull of a ship to be cleaned through a launch and recovery system (not shown) from a ship, a port or a pier.

The cleaning robot 110 may clean the outer surface of the hull by using a cleaning member 113 such as a brush while traveling in a state attached to the outer surface of the hull submerged in water through a magnetic travelling member 112.

Specifically, the cleaning robot 110 of the present embodiment may comprise a robot body 111, a travelling member 112, a cleaning member 113, and an internal filter unit 114.

Here, the robot body 111 may configure the appearance of the cleaning robot 110, and introduce seawater including foreign substances and aquatic organisms which come off the outer surface of the hull to the inside during the cleaning process using the cleaning member 113.

The travelling member 112 may be provided in a lower part of the robot body 111 and formed by a wheel or a caterpillar having the magnet such that the robot may travel in a state attached to the outer surface of the hull through the magnetic force.

The cleaning member 113 may comprise a brush for cleaning the outer surface of the hull while rotating, or a waterjet-type high-pressure spray nozzle for cleaning the outer surface of the hull by spraying high-temperature or room-temperature water at high pressure.

In other words, foreign substances such as various contaminants or various aquatic organisms such as water moss and barnacles may be attached to the bottom or side surface of the hull of the ship located under water, but may be easily removed by a brush-type or waterjet-type cleaning member.

At this time, the foreign substances and aquatic organisms which come off the outer surface of the hull by the cleaning member 113 may be sucked into the robot body 111 by a pump P provided in the internal filter unit 114.

The internal filter unit 1 14 may be provided inside the robot body 111 to filter and collect the foreign substances and aquatic organisms included in the seawater introduced into the robot body 111.

Here, the internal filter unit 114 may have a collection space with the entire outer peripheral surface formed with a filter net, for collecting foreign substances and aquatic organisms.

The internal filter unit 114 may be integrally provided with a pump P for sucking, into the collection space, the seawater introduced into the robot body 111.

The internal filter unit 114 may be detachable from the robot body 111 and replaced when contaminants such as foreign substances and aquatic organisms accumulate in the internal filter unit 114.

The cleaning robot 110 may be connected to the purifying device 120 via a hose member 130, and accordingly seawater filtered by the internal filter unit 114 of the cleaning robot 110 may be introduced into the purifying device 120 via the hose member 130.

The purifying device 120 may purify the seawater introduced from the cleaning robot 110 via the hose member 130.

Such a purifying device 120 may be formed as a container module to be loaded on a ship, or may be installed on land. In the case the purifying device 120 is installed on land, it may be movable.

As an example, the purifying device 120 may be configured as a vehicle-mounted type, or may be provided in a container equipped with wheels on the bottom so as to be movable on land.

As another example, the purifying device 120 may float on the sea. In this case, it may be formed to be capable of self-propulsion in the sea by having a propulsion device (not shown).

Referring to Figs. 1 and 3, the purifying device 120 of the present embodiment may comprise a seawater suction pump 121, a primary filter unit 122, a storage tank unit 125, 126, 127, 128, a secondary filter unit 123 and a controller 124.

Here, the seawater suction pump 121 is connected to the cleaning robot 110 via a hose member 130, to suck in seawater discharged from the cleaning robot 110 via the hose member 130 and transport the same to the purifying device 120.

At this time, the seawater sucked in by the seawater suction pump 121 may be introduced into the primary filter unit 122, and the primary filter unit 122 may collect residual foreign substances and aquatic organisms included in the seawater and discharge them separately.

In other words, the internal filter unit 1 14 of the cleaning robot 110 may collect foreign substances with large particles or large aquatic organisms such as algae and barnacles. The foreign substances with small particles or minute aquatic organisms passing through the internal filter unit 144 of the cleaning robot 110 to be introduced together with the seawater via the hose member 130 may be filtered by a primary filter unit 122 of the purifying device 120 and discharged separately.

As an example, the primary filter unit 122 may filter and collect foreign substances and aquatic organisms of 500 µm or more through a fine filter net, and discharge the collected foreign substances and aquatic organisms separately.

The seawater filtered by the primary filter unit 122 may be stored in a seawater storage tank 125 of the storage tank unit 125, 126, 127, 128, and the seawater stored in the seawater storage tank 125 may be introduced into the secondary filter unit 123 to go through secondary filtration and purification.

The storage tank units 125, 126, 127, 128 may include a seawater storage tank 125, a filter medium supply tank 126, a contaminated water storage tank 127 and a purified water storage tank 128.

Here, the seawater storage tank 125 may store the seawater filtered by the primary filter unit 122 and supply the filtered seawater to the secondary filter unit 123 at the same time, and the filter medium supply tank 126 may supply a filter medium to the secondary filter unit 123.

The contaminated water storage tank 127 may store the contaminated water discharged from the secondary filter unit 123, and the purified water storage tank 128 may store purified water purified by the secondary filter unit 123.

At this time, the purified water stored in the purified water storage tank 128 may be discharged to the sea and be used to wash the secondary filter unit 123.

The secondary filter unit 123 may selectively apply a filter of 10 µm to 90 µm to go through secondary filtration and purification of the seawater filtered by the primary filter unit 122.

At this time, the secondary filter unit 123 may go through secondary filtration of the seawater with a filter only, or selectively go through secondary filtration and purification of the seawater with a filter medium supplied from the filter medium supply tank 126.

As an example, the filter medium may include diatomaceous earth, activated carbon, cellulose, etc. When using a filter medium, the filtration rate may be slower than when using a filter only for filtering seawater, but the filtration performance may increase.

The controller 124 may control the operation of the seawater suction pump 121, primary filter unit 122, storage tank unit 125, 126, 127, 128, and secondary filter unit 123 to suck in and purify the seawater introduced from the cleaning robot 110.

Specifically, the controller 124 may be formed as a control box to be operable by a user, and purify seawater according to pre-input control commands.

As an example, the controller 124 may operate the seawater suction pump 121 to introduce seawater discharged together with foreign substances and aquatic organisms from the cleaning robot 110 into the primary filter unit 122 via the hose member 130. Accordingly, the primary filter unit 122 may filter foreign substances and aquatic organisms from the introduced seawater and discharge them separately, and introduce the filtered seawater into the seawater storage tank 125.

Then, the controller 124 may operates an internal pump (not shown) to introduce the seawater stored in the seawater storage tank 125 into the secondary filter unit 123 to perform secondary filtration and purification through the secondary filter unit 123. The purified seawater may be stored in the purified water storage tank 128, and the contaminated water generated during the purifying process may be stored in the contaminated water storage tank 127.

The secondary filter unit 123 may be automatically washed by operating the controller 124, and a plurality of filters provided in the secondary filter unit 123 may be back-washed using the purified water stored in the purified water storage tank 128.

As such, the system 100 for cleaning the hull of a ship according to the present embodiment may suck in, into a cleaning robot 110, foreign substances and aquatic organisms which come off the outer surface of the hull during the process of cleaning the outer surface of the hull by the cleaning robot 110 and collect the same through an internal filter unit 114. The fine foreign substances and aquatic organisms passing through the internal filter unit 114 to be discharged together with the seawater may be introduced into an external purifying device 120 via a hose member 130. Then, the primary and secondary filter units 122, 123 may filter the fine foreign substances and aquatic organisms in the seawater to purify the seawater, and discharge the purified seawater.

Accordingly, it is not only possible to easily clean the outer surface of the hull, but also possible to quickly filter and collect foreign substances and aquatic organisms discharged during the cleaning process, and purify the seawater and discharge purified seawater at the same time, thereby effectively preventing marine environmental problem.

Meanwhile, Fig. 4 illustrates the configuration of a system 200 for cleaning the hull of a ship according to a second embodiment of the present invention.

Referring to Fig. 4, the system 200 for cleaning the hull of a ship according to a second embodiment of the present invention may detect the state of the outer surface of the hull, and selectively use the internal filter unit 214 of the cleaning robot 210 and the external purifying device 220 according to the state of the outer surface of the hull detected.

Specifically, the cleaning robot 210 of the present embodiment may take images of the state of the outer surface of the hull using a camera unit 212 in the robot body 211, and transmit the photographed image to a management server 240.

Here, the management server 240 of the present embodiment may control the operation of the cleaning robot 210 and purifying device 220 through wired/wireless communication with the cleaning robot 210 and purifying device 220.

The management server 240 may analyze the image of the state of the outer surface of the hull transmitted from the cleaning robot 210, and when cleaning the outer surface of the hull using the cleaning robot 210, the management server 240 may select a purifying mode for processing contaminants attached to the outer surface of the hull according to the degree of contamination of the outer surface of the hull, so that the the internal filter unit 214 of the cleaning robot 210 and the external purifying device 220 may be selectively used.

As an example, as having a reference value set for the degree of contamination of the outer surface of the hull, the management server 240 may analyze the image of the state of the outer surface of the hull transmitted from the cleaning robot 210, and use the internal filter unit 214 of the cleaning robot 210 alone to filter and collect the contaminants generated during the process of cleaning the hull when the degree of contamination of the outer surface of the hull is less than or equal to a predetermined reference value.

At this time, an internal filter unit 214 capable of filtering fine foreign substances and aquatic organisms may be applied to the cleaning robot 210 of the present embodiment.

When the degree of contamination of the outer surface of the hull is greater than or equal to a predetermined reference value, the contaminants sucked in by the cleaning robot 210 during the process of cleaning the outer surface of the hull may be transported to the external purifying device 220 to be processed.

For example, when the degree of fouling of the outer surface of the hull is severe, it would be difficult to process the contaminants using only the internal filter 214 of the cleaning robot 210. In this case, an external purifying device 220 may be used.

In other words, a hose member 230 capable of transporting contaminants to an external purifying device 220 may be connected to the cleaning robot 210, and a bypass line 213 for introducing, into the hose member 230, the contaminants sucked into the cleaning robot 210 during the process of cleaning the hull by bypassing the internal filter unit 214 may be provided inside the cleaning robot 210.

Here, the bypass line 213 may be provided with a control valve 215. The control valve 215 may close the bypass line 213 when using the internal filter 214 of the cleaning robot 210, and the control valve 215 may open the bypass line 213 only when contaminants are introduced into the hose member 230 via the bypass line 213.

Accordingly, contaminants such as foreign substances and aquatic organisms introduced into the hose member 230 via the bypass line 213 of the cleaning robot 210 may be transported to the purifying device 220 together with seawater, and the purifying device 220 may use primary and secondary filter units 222, 223 to filter the contaminants in the seawater and purify the seawater, thereby discharging the purified seawater.

A pump member 250 may be detachably provided on the hose member 230 connecting the cleaning robot 210 and the purifying device 220.

In other words, since there may be an overload in sucking in the seawater and contaminants discharged from the cleaning robot 210 to the hose member 230 for a long period of time using only a seawater suction pump 221 provided in the purifying device 220, an additional pump member (not shown) may be provided on the hose member 230 in the present embodiment.

As such, the system 200 for cleaning the hull of a ship according to the present embodiment may analyze the image of the state of the outer surface of the hull taken by the cleaning robot 210, the internal filter unit 214 of the cleaning robot 210 alone may be used to filter and collect the contaminants generated during the process of cleaning the hull when the degree of contamination of the outer surface of the hull is less than or equal to a predetermined reference value, and transport the contaminants sucked in by the cleaning robot 210 to the external purifying device 220 to be processed when the degree of contamination of the outer surface of the hull is greater than or equal to a predetermined reference value.

As an example, during the process of cleaning the outer surface of the hull using the system 100 for cleaning the hull of a ship of the present embodiment, after analyzing the degree of contamination of the outer surface of the hull in advance, the cleaning robot 210 alone may be independently used to filter and collect the contaminants through the internal filter unit 214 when the degree of contamination is less than or equal to a predetermined reference value, and the purifying device 220 may be connected to the cleaning robot 210 to be used only when the degree of contamination is greater than or equal to a predetermined reference value.

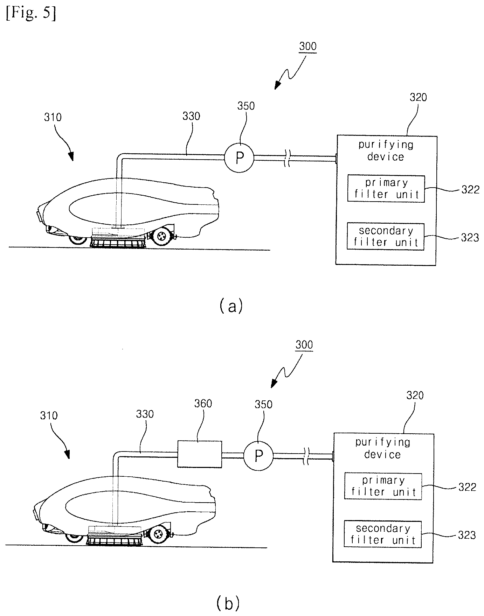

Fig. 5 illustrates the configuration of a system 300 for cleaning the hull of a ship according to a third embodiment of the present invention.

Referring to Fig.5 (a), the system 300 for cleaning the hull of a ship of the present embodiment may use only an external purifying device 320 without having an internal filter unit in the cleaning robot 310.

Specifically, in the present embodiment, the contaminants sucked in during the process of cleaning the outer surface of the hull using the cleaning robot 310 may be transported to the purifying device 320 via a hose member 330.

At this time, a pump member 350 may be provided on the hose member 330, to introduce the contaminants sucked into the cleaning robot 310 to the hose member 330 and transport the same to the purifying device 320 via the hose member 330.

Referring to Fig. 5(b), in the present embodiment, an external filter unit 360 may be detachably provided on the hose member 330, to filter through the external filter unit 360 the contaminants in the seawater introduced from the cleaning robot 310 to the hose member 330 and transport contaminants with small particles which pass through the external filter unit 360 to the purifying device 320 via the hose member 330.

Here, the external filter unit 360 may have a collection space formed with a filter net therein, to collect foreign substances with large particles or large aquatic organisms such as algae and barnacles, and introduce the filtered seawater to the hose member 330.

The purifying device 320 may filter the contaminants such as foreign substances and aquatic organisms introduced together with seawater via the hose member 330 using primary and secondary filter unit 322, 323 to purify seawater, thereby discharging the purified seawater.

As explained above, the system 100, 200, 300 for cleaning the hull of a ship according to an embodiment of the present invention is capable of effectively preventing marine environmental pollution by sucking in contaminants such as foreign substances and aquatic organisms which come off the outer surface of the hull during the process of cleaning the outer surface of the hull by the cleaning robot 110, 210, 310, and quickly going through a filtering process and a purifying process through the purifying device 120, 220, 320 while discharging the purified seawater to the outside.

Also, work efficiency of hull cleaning may be improved by analyzing the image of the state of the outer surface of the hull taken by the cleaning robot 210, and selectively using only the internal filter unit 214 of the cleaning robot 210 or the external purifying device 220 according to the degree of contamination of the outer surface of the hull to purify seawater by filtering the contaminants sucked in together with the seawater by the cleaning robot 210.

The embodiments of the present invention disclosed in the present specification and drawings are merely illustrative examples of the present invention to easily explain the technical disclosure of the present invention and facilitate understanding of the present invention, and are not intended to limit the scope of the present invention.

Accordingly, in addition to the embodiments disclosed above, all modifications or changes derived based on the technical idea of the present invention should be construed as being included in the scope of the present invention.

## Claims

1. A system for cleaning a hull of a ship, **characterized in that** the system comprises:
a cleaning robot configured to clean outer surface of a hull of a ship and introduce seawater including contaminants removed from the outer surface of the hull during cleaning process to the inside of the cleaning robot;
a purifying device connected to the cleaning robot via a hose member, configured to filter and purify the seawater introduced together with the contaminants from the cleaning robot via the hose member.

2. The system of claim 1, wherein the cleaning robot includes:
a robot body;
a travelling member provided in a lower part of the robot body, configured to travel in a state attached to the outer surface of the hull using a magnetic force;
a cleaning member configured to clean the outer surface of the hull and introduce contaminants removed from the outer surface of the hull into the robot body; and
an internal filter unit provided in the robot body detachably, configured to filter and collect the contaminants in the seawater sucked into the inside of the robot body.

3. The system of claim 1, wherein the purifying device includes:
a seawater suction pump configured to suck in the seawater introduced from the cleaning robot via the hose member;
a primary filter unit configured to filter, collect and discharge the contaminants included in the seawater introduced; and
a secondary filter unit configured to secondary-filter and purify the seawater filtered by the primary filter unit.

4. The system of claim 3, further comprising:
a seawater supply tank configured to temporarily store the seawater filtered by the primary filter unit and supply the filtered seawater to the secondary filter unit;
a filter medium supply tank configured to selectively supply a filter medium to the secondary filter unit;
a contaminated water storage tank configured to collect and store contaminated water generated during the seawater filtering and purifying process by the secondary filter unit; and
a purified water storage tank configured to store purified water purified by the secondary filter unit and selectively discharge the purified water to a sea.

5. The system of claim 1, further comprising:
a pump member detachably provided on the hose member, configured to suck in the seawater introduced from the cleaning robot to the hose member and transport the seawater to the purifying device.

6. The system of claim 5, further comprising:
an external filter unit detachably provided on the hose member, configured to filter and collect the contaminants in the seawater introduced from the cleaning robot to the hose member.

7. The system of claim 2, further comprising:
a management server configured to control the cleaning robot and the purifying device in communication with the cleaning robot and the purifying device,
wherein the cleaning robot comprises a camera unit for taking images of the outer surface of the hull and transmitting the images taken by the camera unit to the management server, and
wherein the management server analyzes the images of the outer surface of the hull transmitted from the cleaning robot and selectively operates the internal filter unit of the cleaning robot and the purifying device according to the degree of contamination of the outer surface of the hull.

8. The system of claim 7, wherein the cleaning robot comprises a bypass line for introducing, into the hose member, the seawater sucked into the inside of the cleaning robot by bypassing the internal filter unit, and
wherein the management server controls to operate the internal filter unit of the cleaning robot to filter the seawater sucked in, when a degree of contamination of the outer surface of the hull is less than a predetermined reference value, and
the management server controls to introduce the seawater sucked in to the purifying device via the bypass line and the hose member, when the degree of contamination of the outer surface of the hull is greater than or equal to the predetermined reference value.
